# EUROPÄISCHE PATENTSCHRIFT

(11) **EP 0 615 959 B1**
(45) Veröffentlichungstag und Bekanntmachung des Hinweises auf die Patenterteilung: **18.12.1996**
(21) Anmeldenummer: 94100911.0
(22) Anmeldetag: 22.01.1994
(51) Int. Cl.: C03B 18/16, C04B 35/66

(54) **Feuerbeständiger oder feuerfester Stein als Zinnbad-Bodenstein**
Fire-resistant or refractory brick for use as tin bath bottom block
Brique résistante au feu ou réfractaire pour installation dans la sole d'un bain d'étain

(30) Priorität: 17.02.1993 DE 4304765
(43) Veröffentlichungstag der Anmeldung: 21.09.1994
(73) Patentinhaber: DIDIER-WERKE AG, 65189 Wiesbaden (DE)
(72) Erfinder: Wieland, Klaus, D-65207 Wiesbaden (DE); Weichert, Thomas, Dr., D-65329 Hohenstein (DE); Eschner, Axel, Dr., D-65187 Wiesbaden (DE); Wöhrmeyer, Christoph, Dr., D-65195 Wiesbaden (DE)
(74) Vertreter: Brückner, Raimund, Dipl.-Ing.

(56) Entgegenhaltungen:
- EP-A- 0 453 886
- DE-B- 1 240 772
- GB-A- 2 166 130
- US-A- 3 188 219
- F.M. LEA 'The Chemistry of Cement and Concrete.' 1970 , E. ARNOLD LTD , LONDON GB * Seite 48, letzter Absatz - Seite 52, Absatz 2; Abbildungen 12,13 *

## Beschreibung

Die Erfindung betrifft einen feuerbeständigen oder feuerfesten Stein als Zinnbad-Bodenstein in Anlagen zur Herstellung von Flachglas nach dem Floatverfahren.

Bei Anlagen zur Herstellung von Flachglas nach dem Floatverfahren werden für die Aufnahme des Zinnbades großformatige feuerfeste Steine mit den Abmessungen von z.B. 300 x 600 x 900 mm verwendet. Die Steine bilden einen ebenen Boden, auf dem die Zinnschmelze in flacher Schicht ruht. Die bisher verwendeten Steine auf der Basis von tonerdesilikatischer Schamotte unterliegen im Betrieb bei Temperaturen von 800 - 1000 °C der Korrosion durch das Abplatzen von dünnen schalenförmigen Schichten und durch Rißbildung und Abplatzungen in größerer Tiefe parallel zur heißen Steinoberfläche. Die schalenförmigen Abplatzungen entstehen durch Alkalioxide, wie Na₂O, die aus der Glasschmelze austreten und durch die Zinnschmelze zum Feuerfestmaterial wandern, wo sie unter Volumenzunahme zur Bildung von Feldspäten und Feldspatvertretern im Schamottestein führen.

Die als Zinnbad-Bodensteine eingesetzten Schamottesteine sollen die Anforderungen an die Festigkeit, und insbesondere an eine geringe Gasdurchlässigkeit und hohe Alkalibeständigkeit erfüllen. Nach der DE 40 13 294 A1 werden verbesserte Schamottesteine unter Verwendung von alkalireichem Silikatmaterial vorgeschlagen.

Feuerfeste basische Werkstoffe auf der Basis von Magnesiasinter, Schmelzmagnesia, Forsterit (2Mg0·Si0₂), oder Magnesiaspinell (Mg0·A1₂0₃) haben eine hohe Alkalibeständigkeit, jedoch würde die Ausbildung als Zinnbad-Bodenstein zu Steinen führen, deren hohe Wärmedehnung und hohe Wärmeleitfähigkeit als nachteilig anzusehen sind.

Die Aufgabe nach der Erfindung wird in der Bereitstellung eines feuerbeständigen oder feuerfesten Steines mit hoher Alkalibeständigkeit, hoher Korrosionsbeständigkeit, hohem Infiltrationswiderstand, geringer Wärmeleitfähigkeit und geringer Wärmeausdehnung gesehen.

Die Lösung nach der Aufgabe besteht darin, daß der Stein aus Calciumaluminat in grober und feiner Körnung und einem Bindemittel aus Calciumaluminat besteht.

Die Körnung des Steins besteht aus gesintertem oder geschmolzenen Calciumaluminat. Das Calciumaluminat kann insbesondere ein poröses Material sein, das bei der üblichen Herstellung von gesintertem Calciumaluminat in der Form von sogenanntem Klinker erhalten wird. Durch Brechen und Mahlen der Klinker wird die für den Stein nach der Erfindung erforderliche Körnung hergestellt.

Der hydraulisch gebundene Stein wird getrocknet und bei erhöhter Temperatur getempert oder gebrannt, um auch das als Hydrat gebundene Wasser zu entfernen. Der Brand der Steine kann nach der Trocknung in längerem zeitlichen Abstand, kurz vor dem Einbau der Steine oder vor Inbetriebnahme der aus den Steinen gebildeten Auskleidung erfolgen. Im letzten Fall werden die Steine der Auskleidung über die Fläche, die dem Innern des Ofens zugewandt ist, erhitzt.

Der Stein nach der Erfindung ist in überraschender Weise gegenüber dem Verschleiß durch hinzutretendes Alkalioxid beständig, wobei er in seinen übrigen Eigenschaften gute und ausreichende Werte erreicht. Von besonderem Vorteil ist die niedrige Wärmeleitfähigkeit und die geringe thermische Ausdehnung des Steines.

Der feuerfeste Stein nach der Erfindung wird in der Weise hergestellt, daß eine Mischung aus Calciumaluminat in der Körnung 0,1 bis 3 mm und feinkörniges Calciumaluminat in der Körnung unter 0,1 mm mit in einer Menge von 10 - 30 Gew.-%, bezogen auf das Calciumaluminat enthaltende keramische oxidische Ausgangsmaterial, unter Zusatz von Wasser gemischt, geformt, in feuchter Umgebung gelagert, getrocknet und gebrannt wird.

Bei der Herstellung des feuerfesten Steins aus der Mischung aus Calciumaluminat und Wasser wird die Konsistenz der Mischung so eingestellt, daß großformatige Blöcke durch Pressen hergestellt werden können. Der gepreßte Block wird nach dem Pressvorgang aus der Form genommen und in einer Feuchtkammer bis zum vollständigen Abbinden gelagert. Anschließend folgt die Trocknung und gegebenenfalls eine mechanische Bearbeitung wie Schleifen oder Bohren.

Die Mischung aus Calciumaluminat und Wasser kann auch auf eine stampffähige bzw. vibrierfähige Konsistenz eingestellt werden. Die in Formen eingestampfte oder vibrierte Mischung verbleibt bis zum vollständigen Abbinden in der Form.

Vorzugsweise beträgt der Anteil des feinkörnigen Calciumaluminats in der Körnung unter 0,1 mm 15 - 25 Gew.-%.

Bei der Herstellung der Steine wird als Ausgangsmaterial ein Calciumaluminat-enthaltendes oxidisches Ausgangsmaterial verwendet, das 20 - 60 Gew.-% Ca0, 40 - 80 Gew.-% Al₂0₃ und maximal bis 10 Gew.-% Fe0, Fe₂0₃ Si0₂, Mg0, Ti0₂ enthält. Vorzugsweise beträgt der Gehalt an Si0₂ und Eisenoxid, berechnet als Fe₂0₃ jeweils unter 1,5 Gew.-%. Der Gehalt an Si0₂ und Eisenoxid soll gering sein, um beim Einsatz der Steine Reaktionen mit Alkalioxid und Reaktionen unter dem Einfluß reduzierender Atmosphäre zu vermeiden.

Die Steine haben bei einer relativ hohen Gesamtporosität eine feinporige Ausbildung im Bereich der Matrix, die das feinkörnige Calciumaluminat des Ausgangsmaterials und das calciumaluminathaltige Bindemittel, das aus dem Calciumaluminathydrat durch das Brennen der Steine entstanden ist, enthält. Die Steine haben eine geringe Gasdurchlässigkeit, was sich vorteilhaft auf die Verbesserung des Infiltrationswiderstandes auswirkt.

Der Zinnbad-Bodenstein und das Verfahren zu seiner Herstellung nach der Erfindung wird durch das folgende Beispiel näher erläutert. Zum Vergleich werden die Eigenschaften eines handelsüblichen Zinnbad-Bodensteins auf der Basis von Schamotte genannt.

Zur Herstellung der Steine wurde als Ausgangsmaterial gesintertes Calciumaluminat mit folgenden Eigenschaften verwendet:
71 Gew.-% Al₂O₃, 28 Gew.-% CaO, 0,1 Gew.-% SiO₂.
Das Raumgewicht betrug 1,35 g/cm³ und die Porosität lag bei 53 Vol.-%, gemessen an der Körnung 2 - 6 mm.

Aus dem gesinterten Calciumaluminat in der Körnung 0,1 - 3 mm und fein gemahlenem Calciumaluminat in der Körnung unter 0,1 mm, mit einem Anteil von 85 Gew.% unter 0,04 mm und mit einem Blaine-Wert 3500 cm²/g wurde unter Zusatz von Wasser eine Mischung hergestellt und zu Steinkörpern verpresst. Die Zusammensetzung und die Eigenschaften der hydraulisch abgebundenen und anschließend getrockneten, und bei 1100°C gebrannten Steine gehen aus der folgenden Tabelle hervor. Der Zinnbad-Bodenstein nach der Erfindung zeichnet sich durch insbesondere niedrige Werte der Wärmeausdehnung, Gasdurchlässigkeit und Wärmeleitfähigkeit aus.

### Beispiel

| | | |
|---|---|---|
| Calciumaluminat, gesintert | 1 - 3 mm | 30 Gew.% |
| | 0,1 - 1 mm | 50 Gew.% |
| | -0,1 | 20 Gew.% |
| Sulfitablauge (verhältnis mit Wasser 1 : 1) | | + 2,5 Gew.% |
| Wasser | | + 8 Gew.% |

| Eigenschaften: | | 110°C | 1100°C | Stein nach |
|---|---|---|---|---|
| | | | | Stand der Technik |
| Raumgewicht g/cm³ | | 1,77 | 1,65 | 2,18 |
| Porosität Vol.-% | | 38 | 43 | 19 |
| Kaltdruckfestigkeit N/mm² | | 30 | 60 | 40 |
| Wärmeausdehnung % bei 1100°C | | + 0,5 | | + 0,6 |
| Gasdurchlässigkeit nPm | | | 0,1 | 0 - 3 |
| Wärmeleitfähigkeit W/Km | 400°C | | 0,5 | 1,2 |
| | 700°C | | 0,5 | 1,3 |
| | 1100°C | | 0,5 | 1,4 |
| Al₂0₃-Gehalt % | | 71 | | 43 |
| SiO₂-Gehalt % | | | | 52 |
| Ca0-Gehalt % | | 28,5 | | |

| Raumbeständigkeit (RB) | | | | |
|---|---|---|---|---|
| 900°C/5 Stunden | | - 0,2 | | |
| 1100°C/5 Stunden | | + 0,1 | | |

## Patentansprüche

1. Feuerbeständiger oder feuerfester Stein als Zinnbad-Bodenstein in Anlagen zur Herstellung von Flachglas nach dem Floatverfahren,
dadurch gekennzeichnet,
daß der Stein aus Calciumaluminat in grober und feiner Körnung und einem Bindemittel aus Calciumaluminat besteht.

2. Stein nach Anspruch 1,
dadurch gekennzeichnet,
daß die Körnung des Steins aus gesintertem oder geschmolzenem Calciumaluminat besteht.

3. Stein nach Anspruch 2,
dadurch gekennzeichnet,
daß die Körnung porös ist.

4. Stein nach Anspruch 1,
dadurch gekennzeichnet,
daß er als hydraulisch gebundener, getrockneter und bei erhöhter Temperatur gebrannter Formkörper vorliegt.

5. Verfahren zur Herstellung des zementgebundenen feuerbeständigen oder feuerfesten Steins nach Anspruch 1,
dadurch gekennzeichnet,
daß eine Mischung aus Calciumaluminat in der Körnung 0,1 - 3 mm und feinkörniges Calciumaluminat in der Körnung unter 0,1 mm in einer Menge von 10 - 30 Gew.-%, bezogen auf das Calciumaluminat enthaltende keramische oxidische Ausgangsmaterial, unter Zusatz von Wasser gemischt, geformt, in feuchter Umgebung gelagert, getrocknet und gebrannt wird.

6. Verfahren zur Herstellung des Steins nach Anspruch 5,
dadurch gekennzeichnet,
daß der Anteil des feinkörnigen Calciumaluminats in der Körnung unter 0,1 mm 15 - 25 Gew.-% beträgt.

7. Verfahren zur Herstellung des Steins nach Anspruch 5,
dadurch gekennzeichnet,
daß ein Calciumaluminat enthaltendes oxidisches Ausgangsmaterial verwendet wird, das 20 - 60 Gew.-% Ca0, 40 - 80 Gew.% Al₂0₃ und maximal bis 10 Gew.-% Fe0, Fe0₃, Si0₂, Mg0, Ti0₂ enthält.

8. Verfahren zur Herstellung des Steins nach Anspruch 7,
dadurch gekennzeichnet,
daß bei dem Calciumaluminat enthaltenden oxidischen Ausgangsmaterial der Gehalt an Si0₂ und Eisenoxid, berechnet als Fe₂0₃, jeweils unter 1,5 Gew.-% beträgt.

## Claims

1. Heat resistant or refractory brick for use as a tin bath base brick in installations for manufacturing plate glass by the float method, characterised in that the brick comprises calcium aluminate in coarse and fine granular form and a bonding agent of calcium aluminate.

2. Brick as claimed in Claim 1, characterised in that the granular material of the brick comprises sintered or fused calcium aluminate.

3. Brick as claimed in Claim 2, characterised in that the granular material is porous.

4. Brick as claimed in Claim 1, characterised in that it is present in the form of a hydraulically bonded, dried, shaped body fired at elevated temperature.

5. Method of manufacturing the cement-bonded heat resistant or refractory brick as claimed in Claim 1, characterised in that a mixture of calcium aluminate of grain size 0.1 - 3 mm and fine grained calcium aluminate of grain size below 0.1 mm in an amount of 10 - 30 wt.%, with respect to the ceramic, oxide starting material containing the calcium aluminate, is mixed with the addition of water, shaped, stored in a moist environment, dried and fired.

6. Method of manufacturing the brick as claimed in Claim 5, characterised in that the proportion of the fine grained calcium aluminate of grain size less than 0.1 mm is 15 - 25 wt.%.

7. Method of manufacturing the brick as claimed in Claim 5, characterised in that a calcium aluminate-containing oxide starting material is used which contains 20 - 60 wt.% CaO, 40 - 80 wt.% Al₂O₃ and at most up to 10 wt.% FeO, Fe₂O₃, SiO₂, MgO, TiO₂.

8. Method of manufacturing the brick as claimed in Claim 7, characterised in that the content of SiO₂ and iron oxide, calculated as Fe₂O₃, is in each case less than 1.5 wt.% in the oxide starting material containing calcium aluminate.

## Revendications

1. Brique résistante au feu ou réfractaire destinée à être utilisée comme brique de soie de bain d'étain dans des installations de fabrication de verte plan selon le procédé par flottage, caractérisée par le fait que la brique se compose d'aluminate de calcium sous forme de grains grossiers et de grains fins et d'un liant d'aluminate de calcium.

2. Brique selon la revendication 1, caractérisé par le fait que les grains de la brique sont formés d'aluminate de calcium fritté ou fondu.

3. Brique selon la revendication 2, caractérisé par le fait que les grains sont poreux.

4. Brique selon la revendication 1, caractérisé par le fait qu'il se présente sous la forme d'un corps moulé à liant hydraulique, séché et cuit à température élevée.

5. Procédé de fabrication de la brique résistante au feu ou réfractaire à liant ciment selon la revendication 1, caractérisé par le fait que l'on malaxe en ajoutant de l'eau un mélange d'aluminate de calcium sous forme de grains de dimension comprise entre 0,1 et 0,3 mm et d'aluminate de calcium sous forme de grains fins, de dimension inférieure à 0,1 mm, en une proportion comprise entre 10 et 30% en poids, rapporté au matériau de base de type oxyde - céramique contenant de l'aluminate de calcium, on le met en forme, on l'entrepose en atmosphère humide, on le fait sécher et on le cuit.

6. Procédé de fabrication de la brique selon la revendication 5, caractérisé par le fait que la proportion d'aluminate de calcium sous forme de grains de dimension inférieure à 0,1 mm est comprise entre 15 et 25% en poids.

7. Procédé de fabrication de la brique selon la revendication 5, caractérisé par le fait que l'on utilise un matériau de base de type oxyde contenant de l'aluminate de calcium qui contient 20-60% en poids de CaO, 40-80 en poids de Al₂O₃ et au maximum jusqu'à 10% en poids de FeO, Fe₂O₃, SiO₂, MgO,TiO₂.

8. Procédé de fabrication de la brique selon la revendication 7, caractérisé par le fait que, dans le matériau de base de type oxyde contenant de l'aluminate de calcium la teneur en SiO₂ et en oxyde de fer, calculée en Fe₂O₃, est chaque fois inférieure à 1,5% en poids.
